# EUROPEAN PATENT SPECIFICATION

(11) **EP 0 982 334 B1**
(45) Date of publication and mention of the grant of the patent: **14.04.2004**
(21) Application number: 98306951.9
(22) Date of filing: 28.08.1998
(51) Int. Cl.: C08G 18/62, C08F 8/14

(54) **A process for producing polycondensable macromonomer**
Ein Verfahren zur Herstellung eines polykondensierbaren Makromonomeren
Procédé de préparation d'un macromonomère polycondensable

(43) Date of publication of application: 01.03.2000
(73) Proprietor: Council of Scientific and Industrial Research, New Delhi 110 001 (IN)
(72) Inventor: Ramanthan, Lalgudi Srinivasan, Pune, Maharashtra (IN); Sivaram, Swaminathan, Pune, Maharashtra (IN)
(74) Representative: Towler, Philip Dean

(56) References cited:
- DE-A- 4 405 041
- US-A- 4 818 804
- PATENT ABSTRACTS OF JAPAN vol. 012, no. 103 (C-485), 5 April 1988 & JP 62 232408 A (TOAGOSEI CHEM IND CO LTD), 12 October 1987

## Description

This invention relates to a process for producing macromonomers. More particularly, it relates to a process for preparation of macromonomers with more than one polycondensable functional groups with equal reactivity, having formula (I) in drawing accompanying this specification, wherein,
R=an alkyl group with 1-40 carbon atoms
R¹ = hydrogen or methyl
R² = alkylene units
X = bifunctional moiety
F = functional group
n = 3-45
m = ≥2

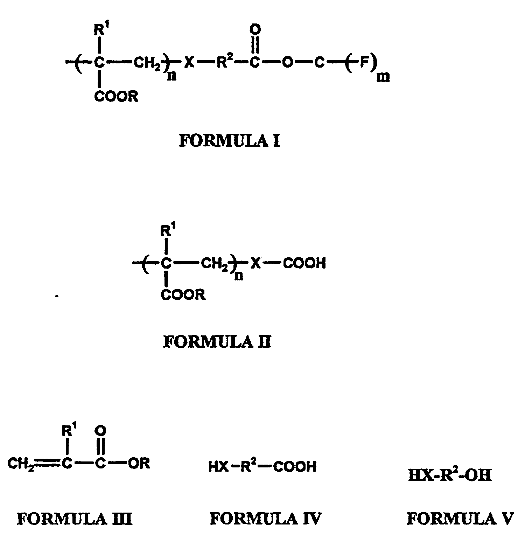

The process of the present invention is employed to produce macronomers which are useful in the production of tailor made graft copolymers and find application as surface active agents, compatibilizers, adhesion promoter, organic coating and bipolymer. Employing the process of present invention, compound I is produced by direct esterification reaction of a carboxylic group containing polymer of formula (II) in the drawing accompanying this specification and an organic compound with more than one hydroxyl group.

### Background of the Invention

Macromonomers are defined as reactive oligomers. They are linear and carry some functional groups, preferably at the chain ends. They are classified into addition polymerizable and condensation polymerizable macromonomers based on the nature of the terminal functional groups. The molecular weight of macromonomer ranges from 500-50,000 and particularly in the range between 1000 and 25000. The synthesis of macromonomers is described in detail in the literature.[Sivaram,S., J.Scientific and Ind.Res.,**56**, 1, (1997) ; Gnanou,Y., Ind.J.Technol., **31** ; 317, (1993); Corner,T., Adv.Polym.Sci., **62** , 95, (1984); Rempp.P.F., Adv.Polym.Sci., **58 ,** 53, (1981)].

Macromonomers are generally produced by ionic living polymerization, group transfer polymerization and free radical polymerization techniques. Of these, the radical routes of producing macromonomer are commercially well acceptable, as it does not require rigorous experimental conditions. Also, the number of monomers amenable to free radical polymerization is large. Macromonomers are useful in the production of tailor made graft copolymers and find application as surface active agents, compatibilizers, adhesion promoter, organic coatings, and biomaterials.

Preparation of macromonomers via free radical method and/or by condensation method is known in the prior art. In one such application, U.S.Patent 5066759 describes a process for preparing macromonomer with two antagonists functional groups. Herein the macromonomer is produced by the reaction between a diisocyanate and a prepolymer with carboxyl group at one end and hydroxyl or amino group at the other end. According to this disclosure the macromonomer contains carboxyl group at one end and hydroxyl or amino group at the other end. However the diisocyanate may also react with the carboxyl group and would not yield a macromonomer with a well-defined terminal functionality. Eur.Pat.Appl. 248574 (Chem.Abst. 108:187481w) describes the preparation of carboxy group containing hydrophilic macromonomer. Herein, the functional group is derived from initiator fragments. U.S.Pat. 5254632 describes a process for producing macromonomer through a transesterification reaction between hydroxyl terminated polyalkylmethacrylate and monomeric ester. U.S Patent 5185421 describes the preparation of fluorinated macromonomer with one or more hydroxyl group. U.S.Patent 4818804 describes the preparation of macromonomers derived from vinyl monomers and mercapto compounds. The polycondensable macromonomer thus obtained contains one or more carboxyl groups, which are attached to primary and secondary carbon atoms. This induces a difference in reactivity of the functional groups and limits the usage of such macromonomer in isocyanate polyaddition or polyesterification reactions.

In prior art, the polycondensable macromonomers with antagonist functional groups are obtained by step growth polymerization that contains ill-defined terminal functional groups. Macromonomers produced through radical transfer reaction contains one or more terminal functional groups with different reactivity and limits its usage in further polymerization reactions.

### Objects of the Invention

The object of the present invention is to provide a method for the preparation of polycondensable macromonomer by free radical polymerization.

Another objective of the present invention is that the polycondensable groups in the macromonomer possess equal reactivity.

### Detailed Description

Accordingly, the present invention provides a process for the preparation of macromonomers by reacting a carboxyl or hydroxyl terminated prepolymers, with an organic compound, containing two or more isocyanate reactive functional groups, in presence of a dehydrating agent and a non-reactive solvent at ambient temperature for a period ranging between 3 and 12 hours, separating the product from the reaction mixture by conventional methods.

In an embodiment of the present invention the carboxyl or hydroxyl group containing prepolymer is prepared by polymerizing a monomer of the formula (III), in the drawing accompanying this specification which are exemplified by methyl methacrylate, butyl methacrylate, lauryl methacrylate, ethyl acrylate, butyl acrylate, hexyl acrylate, n-octyl acrylate, 2-ethylhexyl acrylate, nonyl acrylate, lauryl acrylate and styryl acrylate in presence of a bifunctional agent of the formula (IV) or (V) in the drawing accompanying this specification which includes but not limited to mercaptoacetic acid, 3-mercaptopropionic acid, mercaptosuccinic acid, 2-mercapto ethanol, 1-mercapto-2-propanol and 3-mercapto-1-propanol.

In another embodiment of the present invention the multifunctional organic compounds are reactive in the context of esterification reaction which are exemplified by trimethylol propane, ditrimethylol propane, 1,2,6-hexane triol (its isomers), pentaerythritol, di and tripentaerythritol, sorbitol and glycerine.

In still another embodiment of the present invention the dehydrating agent used includes, but not limited to, dicyclohexylcarbodiimide, N,N'carbonyldiimidazole, dicyclohexylcarbodiimide and aminopyridine, phenyl dichlorophosphate, chlorosulfonyl isocyanate, chlorosilanes, alkyl chloroformate - triethyl amine, pyridinium salts-tributyl amine, 2-chloro-1,3,5-trinitrobenzene -pyridine and phosphate ester.

In yet another embodiment of the present invention the solvents used are non reactive towards the prepolymer, multifunctional organic compounds and the dehydrating agent which are exemplified by chlorinated hydrocarbons, esters, ethers, ketoesters, aliphatic, aromatic and alicyclic hydrocarbons, hydrogenated furans and the mixtures thereof.

In a feature of the present invention, the polymerization can be carried out in any conventional resin reactor equipped with a cooling jacket, a double walled condenser, a thermowell, and an addition funnel for monomer feeding. Stirring can be done by using a magnetic stirrer or by any stirring device. The polymerization reaction can be carried out between 40°C and 100°C and more preferably between 60°C and 90°C. The reaction is exothermic in the beginning and can be controlled by circulating cool water or by drop wise feeding of monomer. The desired molecular weight of the macromonomer is obtained by adjusting molar ratio of bifunctional agent to monomer. The amount in mol percentage of the bifunctional agent based on the amount of monomer charged is preferably in the range between 1 and 45. The polymerization is initiated by the addition of initiator which have a decomposition half life at 70±10°C is ≤ 8 hours, which are exemplified by 2,2'-azobis-2-methyl butyronitrile, 2,2'-azobis-isobutyronitrile, 2,2'-azobis-2-cyclopentyl propionitrile and di-(2-hydroxypropyl) -2,2'-azobis-isobutyrate. The polymerization begins rapidly when the decomposition temperature of the initiator is reached. The reaction is continued until the disappearance of double bond as evident from the ¹H NMR spectrum. The polymer obtained is recovered by precipitation in methanol.

In yet another feature of the present invention, the macromonomer with polycondensable functional group is obtained by the esterification reaction between the prepolymer and an organic compound with two or more functional groups. The esterification reaction is carried at ambient temperature in the presence of carboxyl group activator (CGA) or hydroxyl group activator (HGA). Advantageously by adopting these esterification procedure one can react a carboxy functional or hydroxy functional containing prepolymer with an organic compound having two or more hydroxyl or carboxyl group respectively, at ambient temperature. The reaction is carried out by mixing the prepolymer in a suitable solvent. The prepolymer solution is preferably cooled between 0°C to 15°C and then the multifunctional organic compound and the dehydrating agent are added. Alternatively, the prepolymer solution can also be added to a cooled mixture of multifunctional organic compound and the dehydrating agent. The ambient temperature esterification reactions disclosed in the present invention are very fast and are completed within 1 to 6 hours. The urea formed during the reaction if filtered off and the product is recovered by distilling the solvent.

The process for the present invention is described herein below with examples which are illustrative only and should not be construed to limit the scope of the present invention in any manner.

### Examples 1-6

These examples illustrate the preparation of polycondensable macromonomer from a carboxyl containing prepolymer, an organic multifunctional group and a dehydrating agent.

### Example 1

In a three neck 100 ml round bottom flask fitted with a thermowell, condenser, a magnetic needle and a glass tube for nitrogen purging, charged 25 gram laurylmethacrylate, 3.6 gram mercapto acetic acid, 0.16 gram azobis isobutyronitrile and 29 mL toluene. The reaction mixture is stirred by means of a magnetic stirrer and nitrogen gas is purged continuously. The flask is then heated up to 80° C. The reaction is continued till the disappearance of olifinic signals in ¹H NMR spectrum. The polymer obtained is precipitated in methanol, washed thoroughly with methanol. The solvent is allowed to evaporate and the polymer is dried under vacuum at room temperature. In a separate three neck 100 mL round bottom flask fitted with a condenser, a magnetic needle and a glass tube for nitrogen purging, 3 gram of the above prepolymer is taken and added 50 mL dry dichloromethane. The temperature of the flask is maintained between 0°C and 5°C. 0.9 gram dicyclohexyl carbodiimide, 25 milligram dimethyl aminopyridine are then added followed by 0.8 gram trimethylol propane. The reaction is continued for 3 to 6 hours. Urea formed during the reaction is removed and the product is obtained by evaporating the filtrate.

### Example 2

In a three neck 100 mL round bottom flask fitted with a thermowell, condenser, a magnetic needle and a glass tube for nitrogen purging, charged 25 gram laurylmethacrylate, 1.8 gram mercapto acetic acid, 0.16 gram azobis isobutyronitrile and 29 mL toluene. The reaction mixture is stirred by means of a magnetic stirrer and nitrogen gas is purged continuously. The flask is then heated up to 80° C. The reaction is continued till the disappearance of olifinic signals in ¹H NMR spectrum. The polymer obtained is precipitated in methanol, washed thoroughly with methanol. The solvent is then allowed to evaporate and the polymer is dried under vacuum at room temperature. In a separate three neck 100 mL round bottom flask fitted with a condenser, a magnetic needle and a glass tube for nitrogen purging, 3gram of the above prepolymer is taken and added 50 mL dry dichloromethane. The temperature of the flask is maintained between 0°C and 5°C. 0.5 gram dicyclohexyl carbodiimide, 25 milligram dimethyl aminopyridine are then added followed by 0.43 gram trimethylol propane. The reaction is continued for 3 to 6 hours. Urea formed during the reaction is removed and the product is obtained by evaporating the filtrate.

### Example 3

In a three neck 100 mL round bottom flask fitted with a thermowell, condenser, a magnetic needle and a glass tube for nitrogen purging, charged 25 gram laurylmethacrylate, 0.73 gram mercapto acetic acid, 0.16 gram azobis isobutyronitrile and 29 mL toluene. The reaction mixture is stirred by means of a magnetic stirrer and nitrogen gas is purged continuously. The flask is then heated up to 80° C. The reaction is continued till the disappearance of olifinic signals in ¹H NMR spectrum. The polymer obtained is precipitated in methanol, washed thoroughly with methanol. The solvent is then allowed to evaporate and the polymer is dried under vacuum at room temperature. In a three neck 100 mL round bottom flask fitted with a condenser, a magnetic needle and a glass tube for nitrogen purging, 3 gram of the above prepolymer is taken and added 50 mL dry dichloromethane. The temperature of the flask is maintained between 0°C and 5°C. 0.2 gram dicyclohexyl carbodiimide, 25 milligram dimethyl aminopyridine are then added followed by 0.16 gram trimethylol propane. The reaction is continued for 3 to 6 hours. Urea formed during the reaction is removed and the product is obtained by evaporating the filtrate.

### Example 4

In a three neck 100 mL round bottom flask fitted with a thermowell, condenser, a magnetic needle and a glass tube for nitrogen purging, charged 25 gram methyl methacrylate, 3.6 gram mercapto acetic acid, 0.16 gram azobis isobutyronitrile and 29 mL toluene. The reaction mixture is stirred by means of a magnetic stirrer and nitrogen gas is purged continuously. The flask is then heated up to 80° C. The reaction is continued till the disappearance of olifinic signals in ¹H NMR spectrum. The polymer obtained is precipitated in methanol, washed thoroughly with methanol. The solvent is then allowed to evaporate and the polymer is dried under vacuum at room temperature. In a three neck 100 mL round bottom flask fitted with a condenser, a magnetic needle and a glass tube for nitrogen purging, 3 gram of the above prepolymer is taken and added 50 mL dry dichloromethane. The temperature of the flask is maintained between 0°C and 5°C. 0.93 gram dicyclohexyl carbodiimide, 25 milligram dimethyl aminopyridine are then added followed by 0.8 gram trimethylol propane. The reaction is continued for 3 to 6 hours. Urea formed during the reaction is removed and the product is obtained by evaporating the filtrate.

### Example 5

In a three neck 100 mL round bottom flask fitted with a thermowell, condenser, a magnetic needle and a glass tube for nitrogen purging, charged 25 gram methyl methacrylate, 1.8 gram mercapto acetic acid, 0.16 gram azobis isobutyronitrile and 29 mL toluene. The reaction mixture is stirred by means of a magnetic stirrer and nitrogen gas is purged continuously. The flask is then heated up to 80° C. The reaction is continued till the disappearance of olifinic signals in ¹H NMR spectrum. The polymer obtained is precipitated in methanol, washed thoroughly with methanol. The solvent is then allowed to evaporate and the polymer is dried under vacuum at room temperature. In a three neck 100 mL round bottom flask fitted with a condenser, a magnetic needle and a glass tube for nitrogen purging, 3 gram of the above prepolymer is taken and added 50 mL dry dichloromethane. The temperature of the flask is maintained between 0°C and 5°C. 0.5 gram dicyclohexyl carbodiimide, 25 milligram dimethyl aminopyridine are then added followed by 0.43 gram trimethylol propane. The reaction is continued for 3 to 6 hours. Urea formed during the reaction is removed and the product is obtained by evaporating the filtrate.

### Example 6

In a three neck 100 mL round bottom flask fitted with a thermowell, condenser, a magnetic needle and a glass tube for nitrogen purging, charged 25 gram methyl methacrylate, 0.72 gram mercapto acetic acid, 0.16 gram azobis isobutyronitrile and 29 mL toluene. The reaction mixture is stirred by means of a magnetic stirrer and nitrogen gas is purged continuously. The flask is then heated up to 80° C. The reaction is continued till the disappearance of olifinic signals in ¹H NMR spectrum. The polymer obtained is precipitated in methanol, washed thoroughly with methanol. The solvent is then allowed to evaporate and the polymer is dried under vacuum at room temperature. In a three neck 100 mL round bottom flask fitted with a condenser, a magnetic needle and a glass tube for nitrogen purging, 3 gram of the above prepolymer is taken and added 50 mL dry dichloromethane. The temperature of the flask is maintained between 0°C and 5°C. 0.2 gram dicyclohexyl carbodiimide, 25 milligram dimethyl aminopyridine are then added followed by 0.16 gram trimethylol propane. The reaction is continued for 3 to 6 hours. Urea formed during the reaction is removed and the product is obtained by evaporating the filtrate.

### Example 7

This examples illustrate the preparation of polycondensable macromonomer from a hydroxyl group containing prepolymer, an organic multifunctional group and a dehydrating agent. In a three neck 100 ml round bottom flask fitted with a thermowell, condenser, a magnetic needle and a glass tube for nitrogen purging, charged 25 gram laurylmethacrylate, 3.0 gram mercapto ethanol, 0.16 gram azobis isobutyronitrile and 29 mL toluene. The reaction mixture is stirred by means of a magnetic stirrer and nitrogen gas is purged continuously. The flask is then heated up to 80° C. The reaction is continued till the disappearance of olifinic signals in ¹H NMR spectrum. The polymer obtained is precipitated in methanol, washed thoroughly with methanol. The solvent is allowed to evaporate and the polymer is dried under vacuum at room temperature. In a separate three neck 100 mL round bottom flask fitted with a condenser, a magnetic needle and a glass tube for nitrogen purging, 3 gram of the above prepolymer is taken and added 50 mL dry dichloromethane. The temperature of the flask is maintained between 0°C and 5°C. 1.2 gram dicyclohexyl carbodiimide, 25 milligram dimethyl aminopyridine are then added followed by 0.8 gram dimethylol propionic acid. The reaction is continued for 3 to 6 hours. Urea formed during the reaction is removed and the product is obtained by evaporating the filtrate.

## Claims

1. A process for producing polycondensable macromonomers of formula (I) 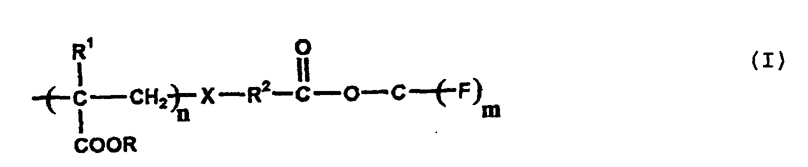 (wherein R is an alkyl group with 1-40 carbon atoms,
R¹ is hydrogen or methyl,
R² is an alkylene unit,
X is a bifunctional moiety,
F is a functional group,
n is 3-45 and
m is ≥2)
which comprises reacting a carboxyl or hydroxyl terminated prepolymer with an organic compound containing two or more isocyanate reactive functional groups in presence of a dehydrating agent and a non-reactive solvent at ambient temperature for a period ranging between 3 and 12 hours, and separating the product from the reaction mixture by conventional methods.

2. A process as claimed in claim 1 wherein the carboxyl or hydroxyl group containing prepolymer is prepared by polymerizing a monomer of the formula (III)
CH₂ = CR¹-COOR (III)
(such as methyl methacrylate, butyl methacrylate, lauryl methacrylate, ethyl acrylate, butyl acrylate, hexyl acrylate, n-octyl acrylate, 2-ethylhexyl acrylate, nonyl acrylate, lauryl acrylate or styryl acrylate) in presence of a bifunctional agent of the formula (IV) or (V)
HX-R²-COOH (IV)
HX-R²-OH (V)
(such as mercaptoacetic acid, 3-mercaptopropionic acid, mercaptosuccinic acid, 2-mercapto ethanol, 1-mercapto-2-propanol or 3-mercapto-1-propanol).

3. A process as claimed in claim 1 wherein the multifunctional organic compound is reactive in an esterification reaction and is for example trimethylol propane, ditrimethylol propane, 1,2,6-hexane triol (or an isomer thereof), pentaerythritol, di- and tripentaerythritol, sorbitol or glycerine.

4. A process as claimed in claim 1 wherein the dehydrating agent is dicyclohexylcarbodiimide, N,N'-carbonyldiimidazole, dicyclohexylcarbodiimide and aminopyridine, phenyl dichlorophosphate, chlorosulfonyl isocyanate, a chlorosilane, alkyl chloroformate-triethyl amine, pyridinium salts (tributyl-amine, 2-chloro-1,3,5-trinitrobenzene-pyridine) or a phosphate ester.

5. A process as claimed in claim 1 wherein the solvent is a chlorinated hydrocarbon, ester, ether, ketoester, aliphatic, aromatic or alicyclic hydrocarbon, hydrogenated furan or a mixture thereof.

## Patentansprüche

1. Verfahren zur Herstellung polykondensierbarer Makromonomere der Formel (I): 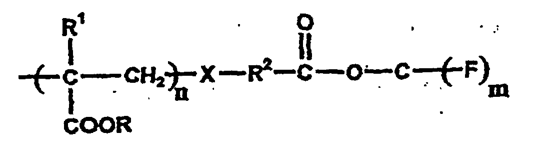 (wobei R eine Alkylgruppe mit 1-40 Kohlenstoffatomen ist,
R¹ Wasserstoff oder Methyl ist
R² eine Alkyleneinheit ist,
X ein bifunktionaler Anteil ist,
F eine funktionelle Gruppe ist,
n 3-45 ist und
m ≥ 2 ist)
welches Umsetzen eines Vorpolymers mit Carboxyl- oder Hydroxyl-Endgruppe mit einer organischen Verbindung, die zwei oder mehr Isocyanat-reaktive funktionelle Gruppen enthält in Gegenwart eines Dehydratisierungsmittels und eines inerten Lösungsmittels bei Raumtemperatur über einen Zeitraum zwischen 3 und 12 Stunden, und Abtrennen des Produkts aus der Reaktionsmischung durch herkömmliche Verfahren, umfasst.

2. Verfahren nach Anspruch 1, wobei das Vorpolymer, welches eine Carboxyl- oder Hydroxyl-Gruppe enthält hergestellt wird durch Polymerisieren eines Monomers der Formel (III)
CH₂ = CHR¹ - COOR (III)
(wie beispielsweise Methylmethacrylat, Butylmethacrylat, Laurylmethacrylat, Ethylacrylat, Butylacrylat, Hexylacrylat, n-Oktylacrylat, 2-Ethylhexylacrylat, Nonylacrylat, Laurylacrylat oder Styrylacrylat) in Gegenwart eines bifunktionalen Mittels der Formel (IV) oder (V)
HX-R²-COOH (IV)
HX-R²-OH (V)
(wie beispielsweise Mercaptoessigsäure, 3-Mercaptopropionsäure, Mercaptosuccinsäure, 2-Mercaptoethanol, 1-Mercapto-2-propanol oder 3-Mercapto-1-propanol).

3. Verfahren nach Anspruch 1, wobei die multifunktionale organische Verbindung in einer Veresterungsreaktion reaktiv ist und zum Beispiel Trimethylolpropan, Ditrimethylolpropan, 1,2,6-Hexantriol (oder ein Isomer davon), Pentaerythritol, Diund Tripentaerythritol, Sorbit oder Glycerin ist.

4. Verfahren nach Anspruch 1, wobei das Dehydratisierungsmittel Dicyclohexylcarbodiimid, N,N'-Carbonyldiimidazol, Dicyclohexylcarbodiimid und Aminopyridin, Phenyldichlorphosphat, Chlorsulfonylisocyanat, ein Chlorsilan, Alkylchlorformiat-triethylamin, Pyridiniumsalze (Tributylamin, 2-Chlor-1,3,5-Trinitrobenzyl-pyridin) oder ein Phosphatester ist.

5. Verfahren nach Anspruch 1, wobei das Lösungsmittel ein chlorierter Kohlenwasserstoff, Ester, Ether, Ketoester, aliphatischer, aromatischer oder alicyclischer Kohlenwasserstoff, hydriertes Furan oder eine Mischung davon ist.

## Revendications

1. Procédé de préparation de macromonomères polycondensables de formule (I) 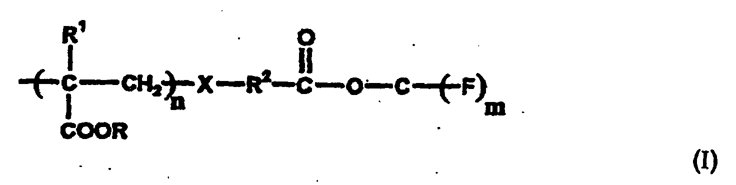 (dans laquelle R est un groupe alcoyle ayant de 1 à 40 atomes de carbone,
R¹ est hydrogène ou méthyle,
R² est un pont alcoylène,
X est un radical bifonctionnel,
F est un groupe fonctionnel,
n va de 3 à 45, et
m est ≥ 2)
qui consiste à faire réagir un prépolymère à terminaison carboxyle ou hydroxyle sur un composé organique contenant deux ou plusieurs groupes fonctionnels réactifs isocyanate en la présence d'un agent de déshydratation et d'un solvant non réactif à la température ambiante pendant une durée comprise entre 3 et 12 heures et à séparer le produit du mélange réactionnel par des procédés habituels.

2. Procédé suivant la revendication 1, dans lequel le prépolymère contenant le groupe carboxyle ou hydroxyle est préparé en polymérisant un monomère de formule (III)
CH₂ = CR¹ - COOR (III)
(tel que méthacrylate de méthyle, méthacrylate de butyle, méthacrylate de lauryle, acrylate d'éthyle, acrylate de butyle, acrylate d'hexyle, acrylate de n-octyle, acrylate de 2-éthylhexyle, acrylate de nonyle, acrylate de lauryle ou acrylate de styryle) en la présence d'un agent bifonctionnel de formule (IV) ou (V)
HX -R²-COOH (IV)
HX-R²-OH (V)
(tel que l'acide mercaptoacétique, l'acide 3-mercaptopropionique, l'acide mercaptosuccinique, le 2-mercapto éthanol, le 1-mercapto-2-propanol ou le 3-mercapto-1-propanol).

3. Procédé suivant la revendication 1 dans lequel le composé organique multifonctionnel est réactif dans une réaction d'estérification et est par exemple le triméthylol propane, le ditriméthylol propane, le 1, 2, 6-hexanetriol (ou l'un de ses isomères), le pentaérythryte, le di et tripentaérythryte, le sorbitol ou la glycérine.

4. Procédé suivant la revendication 1, dans lequel l'agent de déshydratation est le dicyclohexylcarbodiimide, le N,N' carbonyldiimidazole, le dicyclohexylcarbodiimide et l'aminopyridine, le dichlorophosphate de phényle, l'isocyanate de chlorosulfonyle , un chlorosilane, un chloroformiate d'alcoyle-triéthylamine, des sels de pyridinium (tributylamine 2-chloro-1,3,5-trinitrobenzène-pyridine) ou un phosphate.

5. Procédé suivant la revendication 1, dans lequel le solvant est un hydrocarbure chloré, un ester, étheroxyde, un cétoester, un hydrocarbure aliphatique aromatique ou alicyclique, du furan hydrogéné ou l'un de leurs mélanges.
